# EUROPEAN PATENT APPLICATION

(11) **EP 4 734 199 A1**
(43) Date of publication of application: **29.04.2026**
(21) Application number: 25204287.4
(22) Date of filing: 24.09.2025
(51) Int. Cl.: H01M 10/04, H01M 10/613, H01M 10/654, H01M 50/103, H01M 50/117, H01M 50/121, H01M 50/119, H01M 50/124, H01M 50/128, H01M 50/129, H01M 50/131

(54) **BATTERY CELL AND BATTERY MODULE INCLUDING SAME**

(30) Priority: 25.10.2024 KR 20240147769
(71) Applicant: SAMSUNG SDI CO., LTD., Yongin-si, Gyeonggi-do 17084 (KR)
(72) Inventor: Ko, Sujeong, 17084 Yongin-si, Gyeonggi-do (KR)
(74) Representative: Meissner Bolte Partnerschaft mbB

(57) **Abstract**

A battery cell (100, 100') includes an electrode assembly (110) including a positive electrode (111), a negative electrode (113), and a separator (115) between the positive electrode (111) and the negative electrode (113), a case (130) accommodating the electrode assembly (110), the case (130) including an opening (131h), a cap plate (150) connected to the case (130) while covering the opening (131h), and an insulator (170) between an inner circumferential surface of the case (130) and the electrode assembly (110), the insulator (170) being configured to prevent heat generated in the case (130) from being transferred to an outside.

## Description

### BACKGROUND

### 1. Field

The present invention relates to a battery cell and a battery module including the same, and more particularly, to a battery cell and a battery module, each having improved thermal insulation.

### 2. Description of the Related Art

A secondary battery is a battery which may be charged and discharged, as opposed to a primary battery which is not rechargeable. Small capacity secondary batteries are used in small, portable electronic devices such as smartphones, feature phones, notebook computers, digital cameras, and camcorders, while large capacity secondary batteries are widely used as motor driving power sources in hybrid and electric vehicles, as power storage batteries, or the like.

Such a secondary battery includes an electrode assembly including a positive electrode and a negative electrode, a case accommodating the electrode assembly, a cap plate mounted on the case, electrode terminals connected to the electrode assembly, or the like.

The above information described in the description of the related art is intended only to enhance understanding of the background of the present invention and may therefore include information which does not constitute the prior art.

### SUMMARY

A battery cell according to an aspect of the present invention includes an electrode assembly including a positive electrode, a negative electrode, and a separator disposed between the positive electrode and the negative electrode; a case accommodating the electrode assembly, with an opening being provided in one side of the case; a cap plate connected to the case while covering the opening; and an insulator disposed between an inner circumferential surface of the case and the electrode assembly and configured to prevent heat generated in the case from being transferred to outside.

According to embodiments, the insulator may include one of alumina, silica, aerogel, or polyurethane.

According to embodiments, the insulator may include a first insulating layer disposed adjacent to the electrode assembly; and a second insulating layer disposed over the first insulating layer, wherein the first insulating layer and the second insulating layer include different materials.

According to embodiments, the insulator may further include a fire extinguishing layer disposed between the first insulating layer and the second insulating layer and capable of dispensing a fire extinguishing agent.

According to embodiments, the battery cell may further include a coating disposed between the electrode assembly and the insulator and preventing swelling of the case.

According to embodiments, the coating may include a first coating surface disposed on a surface of the case opposite the electrode assembly; and a second coating surface disposed at a selected angle with respect to the first coating surface.

According to embodiments, the thickness of the coating may be in the range of 5% to 10% of the thickness of the electrode assembly.

A battery module according to another aspect of the present invention includes a plurality of battery cells arranged along a preset direction; a module housing configured to accommodate the plurality of the battery cells; and connecting tabs electrically connecting the plurality of the battery cells, wherein each of the plurality of the battery cells includes an electrode assembly including a positive electrode, a negative electrode, and a separator disposed between the positive electrode and the negative electrode; a case accommodating the electrode assembly, with an opening being provided in one side of the case; a cap plate connected to the case while covering the opening; and an insulator disposed between an inner circumferential surface of the case and the electrode assembly and configured to prevent heat generated in the case from being transferred to outside.

According to other embodiments, the insulator may include one of alumina, silica, aerogel, or polyurethane.

According to other embodiments, the insulator may include a first insulating layer disposed adjacent to the electrode assembly; and a second insulating layer disposed over the first insulating layer, wherein the first insulating layer and the second insulating layer include different materials.

According to other embodiments, the insulator may further include a fire extinguishing layer disposed between the first insulating layer and the second insulating layer and capable of dispensing a fire extinguishing agent.

According to other embodiments, the fire extinguishing layer may dispense the fire extinguishing agent in case that the internal temperature of the case is at or above a selected temperature.

According to other embodiments, the battery module may further include a coating disposed between the electrode assembly and the insulator and preventing swelling of the case.

According to other embodiments, the coating may include a first coating surface disposed on a surface of the case opposite the electrode assembly; and a second coating surface disposed at a selected angle with respect to the first coating surface.

According to other embodiments, the thickness of the coating may be in the range of 5% to 10% of the thickness of the electrode assembly.

### BRIEF DESCRIPTION OF THE DRAWINGS

Features will become apparent to those of skill in the art by describing in detail exemplary embodiments with reference to the attached drawings, in which:
FIG. 1 is a perspective view schematically illustrating a battery module according to embodiments of the present invention;
FIG. 2 is a perspective view schematically illustrating the battery cell of FIG. 1;
FIG. 3 is a cross-sectional view along line I-I' of FIG. 2 according to an embodiment;
FIG. 4 is an enlarged view illustrating part A of FIG. 3;
FIG. 5 is a cross-sectional view along line II-II' of FIG. 2;
FIG. 6 is a cross-sectional view along line I-I' of FIG. 2 according to another embodiment;
FIG. 7 is a view illustrating the battery cell of FIG. 6 from which the electrode assembly is removed;
FIG. 8 is an enlarged view illustrating part B of FIG. 6; and
FIG. 9 is a cross-sectional view along line II-II' of FIG. 2 according to another embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, example embodiments of the present invention will be described in detail with reference to the accompanying drawings. First, the terms and words used in this specification and the claims are not to be construed in their ordinary or dictionary sense, but rather in a sense and concept consistent with the technical idea of the present invention, based on the principle that the inventor may define the concept of terms as he/she sees fit to best describe embodiments. Accordingly, it is to be understood that the embodiments described herein and the configurations illustrated in the drawings are only some of the most desirable embodiments of the present invention and are not intended to be exhaustive of the technical ideas of the present invention, and that there may be various equivalents and modifications which may substitute the embodiments and the configurations at the time of filing. Furthermore, when used herein, the words "comprise" and "include" and/or "comprising" and "including" are intended to specify the presence of the shapes, numbers, steps, actions, members, elements, and/or groups thereof mentioned and are not intended to exclude the presence or addition of one or more other shapes, numbers, actions, members, elements, and/or groups thereof. Furthermore, when describing embodiments of the present invention, "may" or "may be" may include "one or more embodiments of the present invention".

The expression indicating that two comparison targets are equal may mean that the two comparison targets are "substantially" equal. Therefore, the substantial equality may include a case in which a deviation considered as being at a low level in the art is present, for example, a deviation within 5% is present. Furthermore, a configuration in which a particular parameter is constant in a region may mean that the parameter is constant from an average point of view.

Although terms, such as "first" and "second", are used to describe various elements, the elements are not limited by these terms. These terms are used only to distinguish one element from another, and a first element may be a second element unless clearly indicated otherwise.

Throughout the specification, each component may be singular or plural, unless clearly indicated otherwise.

It is to be understood that an element is referred to as being "above (or below)" or "on (or under)" another, the element may be on an upper surface (or a lower surface) of the other element and an intervening element may be present between the element and the other element on (or below) the element.

It is also to be understood that when an element is referred to as being "connected to", "coupled to" or "joined to" another element, the element be directly connected or joined to the other element, or an intervening element may be present, or each element may be "connected to", "coupled to" or "joined to" each other through another element. Furthermore, when a portion is referred to as being electrically coupled to another portion, this may include not only a direct connection, but also a connection with another intervening element.

Throughout the specification, "A and/or B" may represent either A or B or both, unless clearly indicated otherwise. For example, "and/or" includes all combinations or any combination of a plurality of elements enumerated. "C to D" may represent C or more and D or less, unless clearly indicated otherwise.

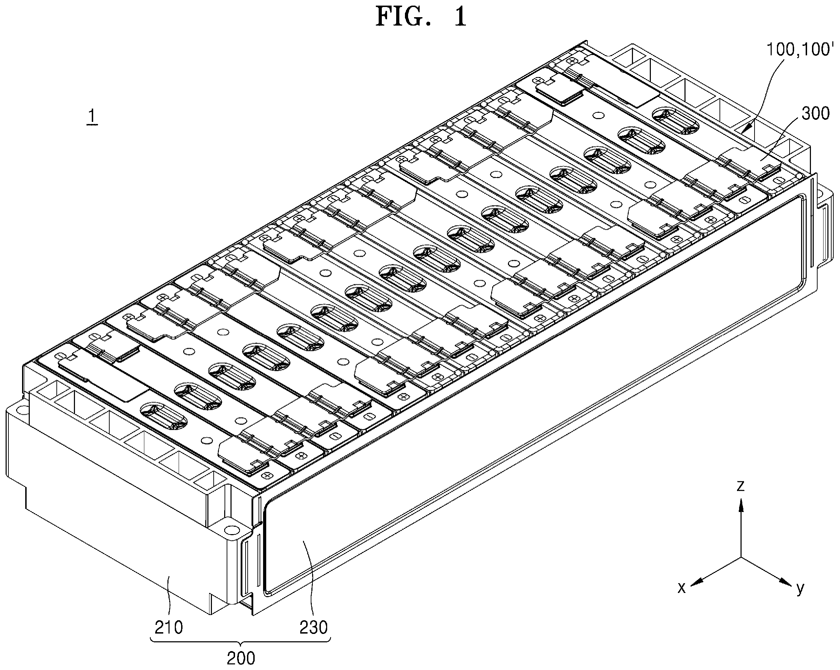

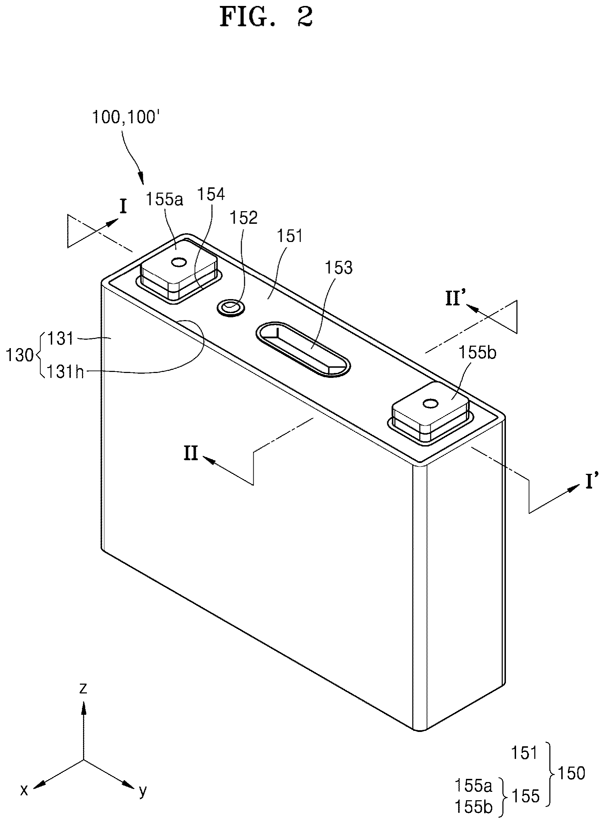

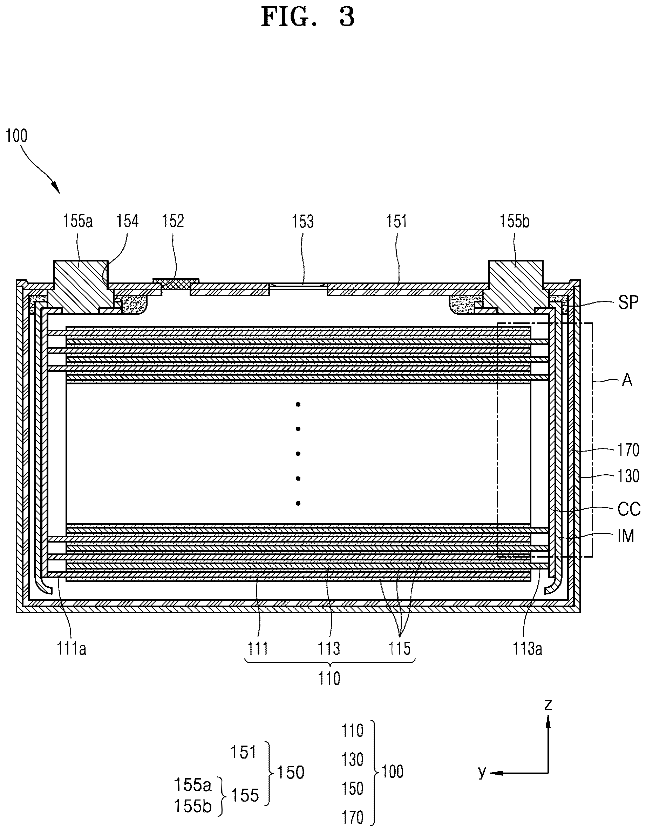

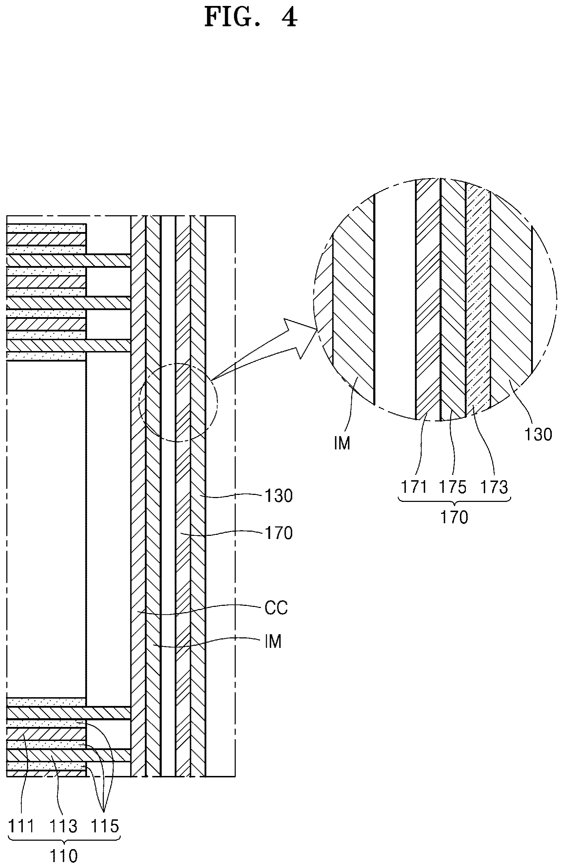

FIG. 1 is a perspective view schematically illustrating a battery module according to embodiments of the present invention. FIG. 2 is a perspective view schematically illustrating a battery cell in the battery module of FIG. 1. FIG. 3 is a cross-sectional view along line I-I' of FIG. 2. FIG. 4 is an enlarged view of part A of FIG. 3.

Referring to FIG. 1, a battery module 1 may include a plurality of battery cells 100 connected in series or in parallel to increase voltage and capacity. The plurality of battery cells 100 may be arranged along a direction.

The battery module 1 according to an embodiment of the present invention may include the battery cells 100, a module housing 200, and connecting tabs 300. The battery cell 100 may be a rechargeable and dischargeable cell, and may include, e.g., a lithium-ion battery, a nickel metal hydride battery, a lithium polymer battery, or the like. The battery cell 100 may be used in smartphones, notebook computers, electric vehicles, or the like, and specific configurations of the battery cell 100 will be described later.

The module housing 200 may accommodate the plurality of battery cells 100, in which the plurality of battery cells 100 may be arranged along a direction (e.g., the x-axis direction in FIG. 1) such that wider surfaces of adjacent battery cells 100 are opposite each other in the module housing 200. Referring to FIG. 1, the module housing 200 may include a pair of end plates 210 disposed on the outermost portions of the battery cells 100, a pair of side plates 230 connected to the pair of end plates 210 and configured to cover sides of the plurality of battery cells 100, and a bottom plate supporting the bottom surfaces of the battery cells 100.

The connection of the end plate 210 and the side plate 230 may be accomplished using members, e.g., bolts or the like, or by welding, and may be accomplished by any means which allows the connection to be made. The end plates 210 may be elastic, and may absorb pressure (hereinafter referred to as "swelling force") caused by the expansion (hereinafter referred to as "swelling") of the battery cells 100 when the battery cells 100 expand due to the charging and discharging operations of the battery cells 100, thereby preventing the performance degradation of the battery cells 100 and improving the structural stability of the battery module 1.

Referring to FIG. 1, the connecting tabs 300 may electrically connect the plurality of battery cells 100, e.g., may connect adjacent battery cells 100 in series or in parallel. For example, the connecting tabs 300 may be coupled to electrode terminals 155 (FIG. 2) to electrically connect adjacent battery cells 100 (e.g., may include busbars). Although the series connection has been described above as an example, various connecting structures may be used as desired, and the number and arrangement of the battery cells 100 may be modified as desired.

Referring to FIGS. 2 to 4, each of the battery cells 100 according to an embodiment of the present invention may be a rechargeable and dischargeable battery, and may include an electrode assembly 110, a case 130, a cap plate 150, and an insulator 170.

The electrode assembly 110 according to an embodiment of the present invention may include a positive electrode 111, a negative electrode 113, and a separator 115 disposed between the positive electrode 111 and the negative electrode 113. For example, the electrode assembly 110 may be formed by winding after the separator 115, which is an insulator, is inserted between the positive electrode 111 and the negative electrode 113. In another example, the electrode assembly 110 may have a structure in which the positive electrode 111 including a plurality of sheets and the negative electrode 113 including a plurality of sheets are alternately stacked with the separator 115 provided between the positive electrode 111 and the negative electrode 113.

The battery cell 100 according to the present embodiment is described as a prismatic lithium ion battery cell. However, the present invention may be applied to various shapes of battery cells 100, e.g., lithium polymer battery cells or cylindrical battery cells.

Referring to FIG. 3, each of the positive electrode 111 and the negative electrode 113 may include a coated portion which is a region where an active material is applied to a current collector (CC) formed of a thin sheet of metal foil and an uncoated portion 111a or 113a which is a region where no active material is applied.

Referring to FIGS. 1 to 3, the case 130 may accommodate the electrode assembly 110 therein, form the overall contour of the battery cell 100, and may include a conductive metal such as aluminum, an aluminum alloy, or nickel-plated steel. In other words, the case 130 may provide a space in which the electrode assembly 110 is accommodated. Referring to FIGS. 2 and 3, the case 130 may include a case body 131 shaped to enclose the electrode assembly 110 therein.

Referring to FIGS. 2 and 3, the case 130 may include the case body 131 shaped to enclose the electrode assembly 110 therein. The case body 131 according to the present embodiment is shown to have a rectangular parallelepiped shape with an opening provided in a side thereof, but may be variously modified to have, e.g., a cylindrical shape or a prismatic shape. The case body 131 according to an embodiment of the present invention may be provided in a shape having an internal space. The internal space of the case 130 may accommodate the electrode assembly 110 and an electrolyte.

Referring to FIG. 2, the case body 131 may be provided with an opening 131h in a surface thereof. The electrode assembly 110 may be inserted into the case body 131 through the opening 131h.

Referring to FIGS. 1 to 3, the cap plate 150 may be coupled to the case 130 while covering the opening 131h, and may include a conductive material. The cap plate 150 may include a cap plate body 151 and electrode terminals 155.

The cap plate body 151 according to an embodiment of the present invention may cover the opening 131h, and may include a thin plate and welded and joined to the opening 131h.

By protecting the surface of the open case body 131 with the cap plate body 151, material outside the battery cell 100 may be prevented from entering the interior of the case 130. The cap plate body 151 may also seal the leakage of the electrolyte and the electrode assembly 110 in the case 130. An injection hole 152, a vent 153, and terminal holes 154 may be provided on a surface of the cap plate body 151.

Referring to FIGS. 2 and 3, the cap plate body 151 may be provided with the injection hole 152 in the shape of a hole through which the electrolyte may be injected. The injection hole 152 may be a passage through which the electrolyte may be replenished or replaced during maintenance of the battery cell 100.

An injection stopper may be fitted into the injection hole 152 according to an embodiment of the present invention to seal the injection hole 152. The injection stopper according to an embodiment of the present invention may include a material having elastic resilience, such as polyethylene, polypropylene, silicone, or the like. Accordingly, the injection stopper may improve the sealing of the injection hole 152 without reacting with the electrolyte in the case 130, thereby maintaining the stability of the battery cell 100.

Referring to FIGS. 2 and 3, the injection hole 152 may be disposed on one side of the vent 153, and may be disposed between the plurality of electrode terminals 155a and 155b. However, the injection hole 152 may be variously modified, such as to be disposed outside the electrode terminals 155 or disposed away from the vent 153.

Referring now to FIGS. 1 to 3, the vent 153 may be provided on the cap plate body 151, and may rupture depending on the internal pressure of the case 130. The vent 153 may be configured to rupture in case that the internal pressure of the case 130 increases or a thermal runaway occurs, and the rupture of the vent 153 may allow gas in the case 130 to be released to the outside of the battery cell 100. Accordingly, the safety of the battery cell 100 may be ensured and the risk of overcharging, overheating, or the like may be reduced.

Referring to FIG. 3, the cap plate body 151 may be provided with the terminal holes 154 connecting the inside and the outside of the case 130. The terminal holes 154 may be regions in which the electrode terminals 155 to be described later are mounted, and may be provided according to the number of electrode terminals 155.

Referring to FIGS. 1 to 3, the electrode terminals 155 may be electrically connected to the positive electrode 111 or the negative electrode 113, and may extend through the cap plate body 151 to protrude outward. For example, the electrode terminals 155 may be provided on the terminal holes 154 formed on the cap plate body 151. The electrode terminals 155 may be provided in a plurality along the longitudinal direction of the cap plate body 151 (i.e., the y-axis direction in FIG. 2), and may be the first terminal 155a and the second terminal 155b, respectively.

Referring to FIG. 1, the first terminal 155a and the second terminal 155b may be electrically connected to adjacent battery cells 100 through the connecting tabs 300. The first terminal 155a may be either a positive electrode terminal or a negative electrode terminal. In case that the first terminal 155a is a positive electrode terminal, the second terminal 155b may be a negative electrode terminal, and in another example, in case that the first terminal 155a is a negative electrode terminal, the second terminal 155b may be a positive electrode terminal. For example, the first terminal 155a and the second terminal 155b may be electrically polarized differently.

The outer circumferential surfaces of the upper posts of the first terminal 155a and the second terminal 155b protruding outward from the cap plate body 151 may be threaded, and may be fixed to the cap plate body 151 with nuts. However, the first terminal 155a and the second terminal 155b may be variously modified, e.g., to be riveted to the cap plate body 151 using a rivet structure or to be joined to the cap plate body 151 by welding.

The first terminal 155a and the second terminal 155b may be electrically connected to the current collectors CC joined to the uncoated portions 111a and 113a. For example, the plurality of electrode terminals 155a and 155b may be welded to the current collectors CC. in another example, the plurality of electrode terminals 155a and 155b and the current collectors CC may be integrally joined.

Further, insulating members IM may be disposed between the electrode assembly 110 and the cap plate 150. Here, the insulating members IM may be disposed on opposite sides of the electrode assembly 110, respectively, and each of the insulating members IM disposed on the opposite sides of the electrode assembly 110 may be disposed between the electrode assembly 110 and the cap plate 150.

Furthermore, each of the insulating members IM may extend along the longitudinal direction of the case 130 (i.e., the z-axis direction in FIG. 3), such that the electrode assembly 110 may be disposed on one side of the insulating member IM and a surface of the case 130 may be disposed on another side of the insulating member IM.

A separating member SP may be disposed between the insulating member IM and the electrode terminal 155 according to an embodiment of the present invention. One side of the separating member SP may be in contact with the electrode terminal 155, and the other side of the separating member SP may be in contact with the insulating member IM.

Furthermore, the separating member SP may be disposed between the case and the insulating member IM to prevent the case 130 and the insulating member IM from contacting each other. Accordingly, the electrode terminal 155 welded to the current collector CC may be joined to an end of the insulating member IM and an end of the separating member SP.

Referring to FIGS. 3 and 4, the insulator 170 may be disposed between the inner circumferential surfaces of the case 130 and the electrode assembly 110 to prevent heat generated in the case 130 from being transferred to the outside. The insulator 170 according to an embodiment of the present invention may be disposed on the inner circumferential surfaces of the case 130 to enclose the side surfaces of the electrode assembly 110. For example, referring to FIG. 3, the insulator 170 may be directly on inner surfaces of the side (e.g., lateral) surfaces of the case 130, and may continuously extend to cover the entire side surfaces of the case 130. Accordingly, in the event of a fire in any battery cell of the plurality of battery cells 100 in the module housing 200, the heat may be quickly blocked in the battery cell 100 before spreading to the outside, thereby preventing the fire from spreading.

Referring to FIG. 3, the insulator 170 may also be disposed on the bottom surface of the case 130 and on the cap plate 150. For example, referring to FIG. 3, the insulator 170 may continuously extend from the side surfaces of the case 130 to the bottom of the case 130 to cover the entire inner surface of the bottom of the case 130. Accordingly, the insulator 170 may be disposed not only on the side surfaces, but also on the top and bottom surfaces of the electrode assembly 110 and more effectively block heat in the event of a fire.

The insulator 170 according to an embodiment of the present invention may include at least one of, e.g., alumina, silica, aerogel, or polyurethane. However, the insulator 170 may be modified using various materials capable of preventing heat from being transferred from the inside to the outside of the cell.

The insulator 170 according to an embodiment of the present invention may be applied to and formed on the inner circumferential surfaces of the case 130 by coating. In this case, the application may be performed using a brush, a roller, a spray, or the like.

In case that the insulator 170 is formed by coating, the insulator 170 may be formed separately on the case 130 and on the cap plate 150. The battery cell 100 according to an embodiment of the present invention may be manufactured in a manner in which the interior of the case 130 and a surface of the cap plate are each coated with the insulator 170 and, after a sufficient drying time, fitted together.

In another embodiment, the insulator 170 may be pre-processed in the shape of a separate sheet and then disposed on the interior of the case 130. In case that the insulators 170 are formed in a sheet shape, the battery cell 100 may also be manufactured by, for example, attaching the sheets to the interior of the case 130 and one side of the cap plate, respectively, prior to assembly. In this case, the surface of the cap plate on which the insulator 170 is disposed may be the surface opposite the electrode assembly 110 in a state in which the battery cell 100 is assembled.

Because the injection hole 152, the vent 153, the terminal holes 154, and the like are provided on the cap plate body 151, the insulator 170 may be coated so as not to cover the injection hole 152, the vent 153, the terminal holes 154, or the like provided on the cap plate body 151.

The insulator 170 according to an embodiment of the present invention may include a first insulating layer 171 and a second insulating layer 173.

The first insulating layer 171 may be disposed adjacent to the electrode assembly 110, and the second insulating layer 173 may be disposed over the first insulating layer 171. For example, the second insulating layer 173 may be disposed more adjacent to the inner circumferential surfaces of the case 130 than the first insulating layer 171. For example, referring to FIG. 4, the second insulating layer 173 may be disposed directly on the inner surface of the case 130, such that the second insulating layer 173 may be between the case 130 and the first insulating layer 171.

For example, the first insulating layer 171 and the second insulating layer 173 according to an embodiment of the present invention may include different materials. In this case, each of the first insulating layer 171 and the second insulating layer 173 may include one of alumina, silica, aerogel, or polyurethane. In another example, the first insulating layer 171 and the second insulating layer 173 may include the same material.

For example, the first insulating layer 171 and the second insulating layer 173 may be formed to have different thicknesses. Accordingly, the insulator 170 having desired insulating performance may be designed by combining the thickness ratio and materials of the plurality of insulating layers depending on the performance and size of the battery cell 100 to which the insulator 170 is applied.

In another example, each of the first insulating layer 171 and the second insulating layer 173 may be formed by being applied to the inner circumferential surfaces of the case 130. However, each of the first insulating layer 171 and the second insulating layer 173 may also be formed by being processed into the shape of an insulating sheet and attached to the inner circumferential surfaces of the case 130.

Referring to FIG. 4, a fire extinguishing layer 175 may be disposed between the first insulating layer 171 and the second insulating layer 173. The fire extinguishing layer 175 may dispense a fire extinguishing agent, e.g., may dispense a fire extinguishing agent in case that the internal temperature of the case 130 is at or above a selected temperature.

The extinguishing agent may be, e.g., ammonium phosphate or sodium bicarbonate. However, the extinguishing agent may be variously modified. The extinguishing agent may be in a powder form, e.g., phosphate extinguishing agents or bicarbonate extinguishing agents, liquid extinguishing agents, gaseous extinguishing agents, hydrogel extinguishing agents, or the like.

For example, the fire extinguishing layer 175 may include a fire extinguishing capsule which contains a fire extinguishing agent therein and is foamed at a selected temperature. The fire extinguishing capsule may include a spherical shell forming the contour of the capsule and a fire extinguishing agent contained in the shell. The fire extinguishing capsule may expand when heat is generated externally and dispense the fire extinguishing agent contained therein, in which the material and thickness of the shell may be adjusted when the fire extinguishing capsule is formed so that the fire extinguishing agent is dispensed at a selected temperature. Accordingly, the internal temperature may be adjusted so that the extinguishing agent is dispensed at an optimal temperature when the internal temperature of the battery cell 100 is increased.

Referring to FIG. 4, the first insulating layer 171, the fire extinguishing layer 175, and the second insulating layer 173 may be disposed sequentially along a direction oriented away from the electrode assembly 110. For example, referring to FIG. 4, the first insulating layer 171 may be spaced apart from the insulating member IM covering the current collector CC. For example, the second insulating layer 173 may be formed with a relatively thin thickness to facilitate the release of the fire extinguishing agent from the battery cell 100 in the event of a fire.

In coating the interior of the battery cell 100, the second insulating layer 173, the fire extinguishing layer 175, and the first insulating layer 171 may be coated sequentially on the inner circumferential surfaces of the case 130. However, the first insulating layer 171, the fire extinguishing layer 175, and the second insulating layer 173 may be mounted in the case 130 after having been pre-processed into a sheet shape.

In case that the insulator 170 is disposed on the surface of the cap plate, the fire extinguishing layer 175 may also be disposed on the side of the cap plate to face the electrode assembly 110. In this case, in case that the fire extinguishing agent is released due to an increase in temperature in the battery cell 100, the fire extinguishing agent may be quickly released into the interior of the case 130 by gravity and may have the effect of quickly extinguishing the fire.

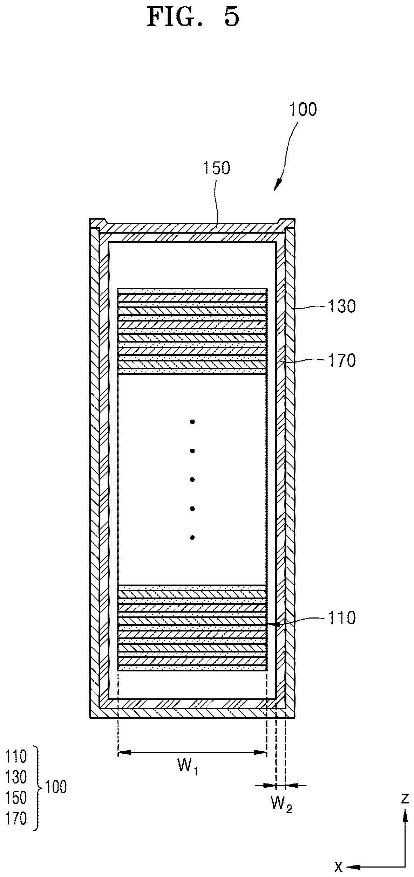

Referring to FIG. 5, the thickness W₂ of the insulator 170 may be in the range of 5% to 10% of the thickness W₁ of the electrode assembly 110. In this case, the thicknesses of the insulator 170 and the electrode assembly 110 may refer to the lengths along the left-to-right direction or along the x-axis direction in FIG. 5.

In case that the thickness W₂ of the insulator 170 is less than 5% of the thickness W₁ of the electrode assembly 110, the insulating effect of the insulator 170 may not be sufficient. Furthermore, in case that the thickness W₂ of the insulator 170 is 10% or more of the thickness W₁ of the electrode assembly 110, the insulator 170 may occupy an excessive space in the case 130 having a limited volume, thereby reducing the energy efficiency of the battery cell 100.

Therefore, the thickness W₂ of the insulator 170 may be in the range of 5% to 10% of the thickness W₁ of the electrode assembly 110, so that the insulator 170 may have a heat blocking effect in the event of a fire in the battery cell 100 and may have a sufficient space in the case 130 to accommodate the electrode assembly 110, thereby achieving a selected level of energy efficiency.

The principle of operation and the effects of the battery module 1 according to an embodiment of the present invention as described above will be described.

Referring to FIGS. 1 to 5, the battery module 1 according to an embodiment of the present invention may include the battery cells 100, the module housing 200, and the connecting tabs 300. The battery cells 100 are arranged in a row along a direction in the module housing 200, in which the connecting tabs 300 may be coupled to the electrode terminals 155 of adjacent batteries to electrically connect the two adjacent battery cells 100.

Referring to FIGS. 2 to 5, each of the battery cells 100 may include the electrode assembly 110, the case 130, the cap plate 150, and the insulator 170. The insulator 170 may be disposed on all inner circumferential surfaces of the case 130, except for an open side. In other words, the insulator 170 may be disposed between the electrode assembly 110 and the case 130 to prevent heat generated in the electrode assembly 110 from being transferred to the outside of the case 130.

The insulator 170 may include the first insulating layer 171, the second insulating layer 173, and the fire extinguishing layer 175 disposed between the first insulating layer 171 and the second insulating layer 173, in which the first insulating layer 171 and the second insulating layer 173 may include different materials. Furthermore, the fire extinguishing layer 175 may include a fire extinguishing agent which is released when the temperature inside the case 130 reaches a predetermined temperature, in which the fire extinguishing agent may not only prevent heat from entering or exiting but also quickly extinguish a fire in the battery cell 100.

Generally, in a battery module in which a plurality of battery cells are arranged in a row, a fire in one of the battery cells may easily spread to adjacent battery cells 100. As a result, the fire may quickly become a large fire.

In contrast, the battery cell 100 according to an embodiment of the present invention may prevent a large fire using the insulator 170 disposed in the case 130 to block heat transfer to the outside, thereby quickly blocking heat transfer in the event of a fire. Further, the insulator 170 may include a plurality of insulating layers which may include different materials and at different thicknesses, and thus may be adjusted to have intended insulating performance as desired. Furthermore, the fire extinguishing layer 175 provided between the plurality of insulating layers may quickly extinguish a fire while simultaneously blocking heat in the event of a fire.

The configuration, the principle of operation, and the effects of a battery module 1' according to another embodiment of the present invention will be described below. The battery module 1' may include a plurality of battery cells 100', each battery cell 100' including the electrode assembly 110, the case 130, the cap plate 150, and the insulator 170 described previously, and may further include a coating 190. Hereinafter, the coating 190 will be mainly described in detail.

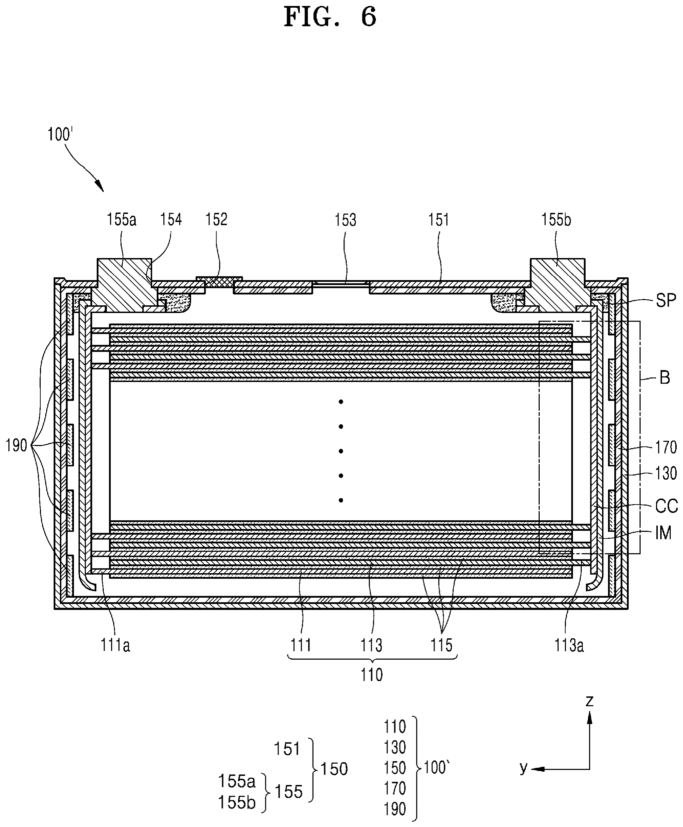

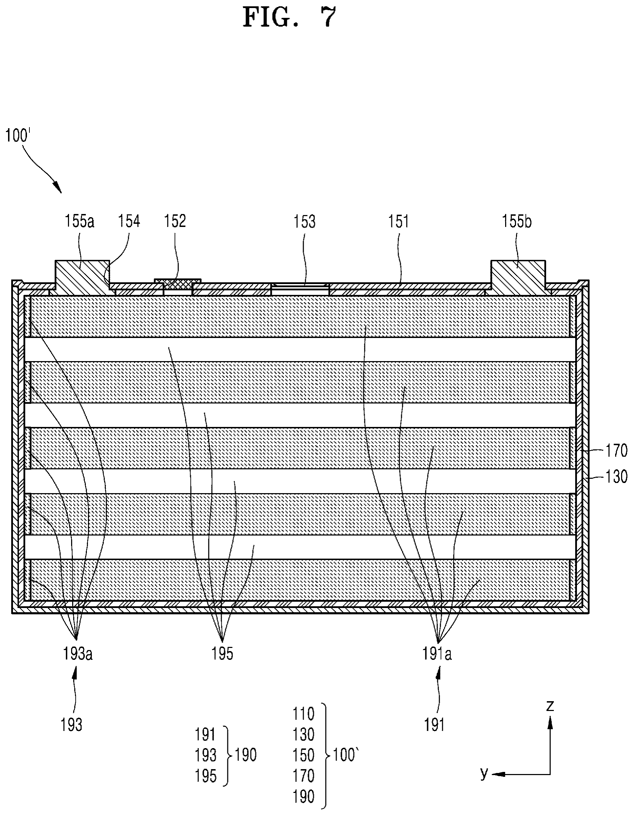

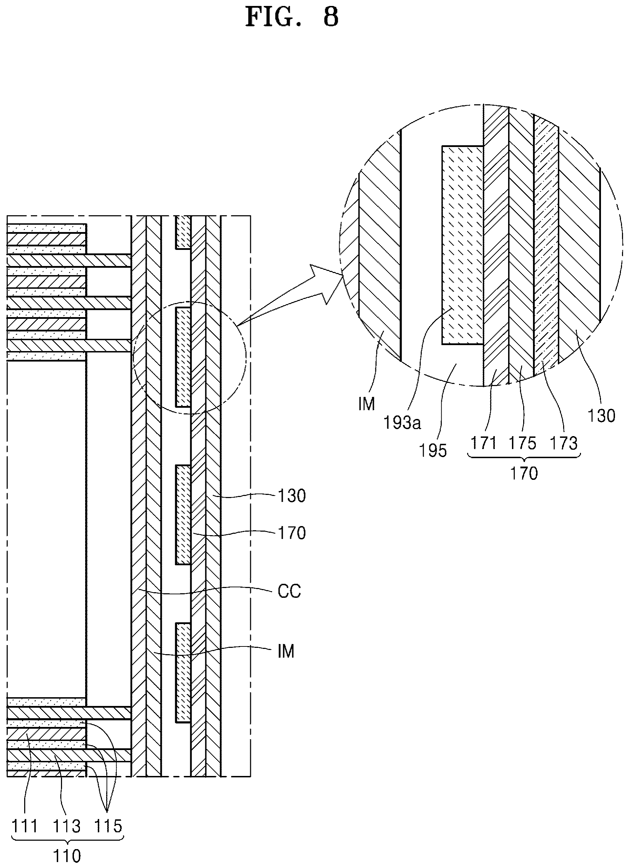

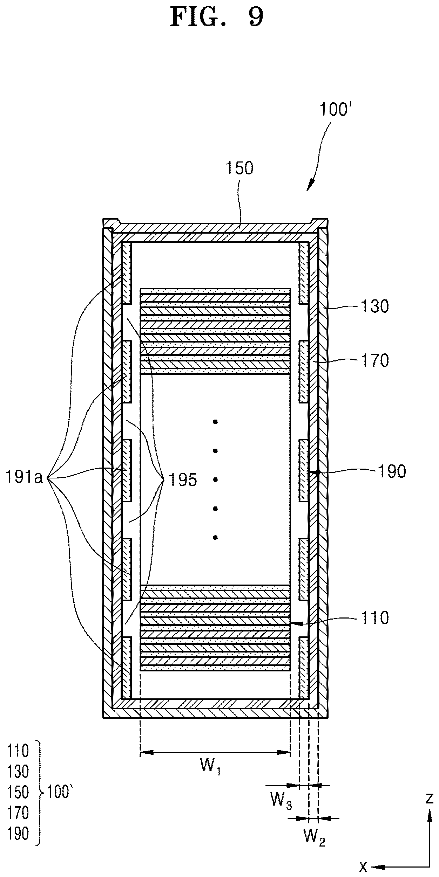

FIG. 6 is a cross-sectional view taken along line I-I' of the battery cell according to another embodiment of FIG. 2. FIG. 7 is a view illustrating the battery cell of FIG. 6 from which the electrode assembly is removed. FIG. 8 is a view illustrating part B of FIG. 6. FIG. 9 is a cross-sectional view taken along line II-II' of the battery cell according to another embodiment of FIG. 2.

Referring to FIG. 6, the coating 190 may be disposed between the electrode assembly 110 and the insulator 170 to prevent swelling of the case 130, and may include first coating surfaces 191 and second coating surfaces 193.

In addition to the insulator 170, the coating 190 may include an insulating material which prevents heat in the battery cell 100' from being transferred to the outside. For example, the coating 190 may include one of alumina, silica, aerogel, or polyurethane. However, the coating may be modified to be formed of a variety of materials.

The first coating surfaces 191 may be disposed on a surface of the case 130 opposite the electrode assembly 110, and may be disposed along the long axis of the battery cell 100' (i.e., the y-axis direction in FIG. 7). In other words, the first coating surfaces 191 may be disposed on wider surfaces of the inner circumferential surfaces of the case 130.

Because a total of two surfaces extend along the long axis direction on the inner circumferential surfaces of the case 130 and are arranged to face each other, the first coating surfaces 191 may also be arranged to face each other on the interior of the case 130. In this case, the electrode assembly 110 may be disposed between the two opposing first coating surfaces 191.

The second coating surfaces 193 may be disposed at selected angles with respect to the first coating surfaces 191, and may be disposed on a different surface of the case 130. For example, the second coating surfaces 193 may be disposed on the inner circumferential surfaces of the case 130 which are perpendicular to the surface on which the first coating surfaces 191 are disposed. Accordingly, the second coating surfaces 193 may also be disposed perpendicular to the first coating surfaces 191, and may be disposed along the short axis of the battery cell 100' (i.e., into the page along the x-axis direction in FIG. 6).

Similar to the plurality of first coating surfaces 191, a plurality of second coating surfaces 193 may be provided, and the plurality of second coating surfaces 193 may be arranged to face each other. In other words, the coating 190 may be disposed on all four surfaces of the interior of the case 130. Furthermore, the two opposing first coating surfaces 191 may be connected to each other on the second coating surfaces 193.

Referring to FIG. 7, each of the first coating surfaces 191 and the second coating surfaces 193 may include a plurality of coating layers 191a or 193a which are spaced apart from and parallel to each other. The plurality of coating layers 191a or 193a may be disposed on the interior of the case 130 to extend along the first coating surfaces 191 and the second coating surfaces 193 in an overall shape which encloses the electrode assembly 110. The coating 190 according to another embodiment of the present invention may include a plurality of coating layers 191a or 193a in a band shape which encloses the inner circumferential surfaces of the case 130.

In other words, the shape of the coating 190 may be a pattern of stripes which are spaced along the height direction (i.e., the z-axis direction) of the case 130 and extend along the length direction of the first coating surfaces 191 and the length direction of the second coating surfaces 193 (i.e., the y-axis direction and the x-axis direction). The plurality of coating layers 191a or 193a may be disposed in a number ranging from 5 to 15 per side along the height direction (z-axis direction) of the case 130.

Referring to FIG. 8, a cooling fluid path 195 may be provided between adjacent coating layers of the plurality of coating layers 191a or 193a, through which an electrolyte injected into the case 130 may flow. The cooling fluid paths 195 may be regions where none of the coating layers 191a and 193a is formed, and the insulator 170 may be exposed in the corresponding regions. In other words, coating layers 191a or 193a may be disposed on respective sides of a single cooling fluid path 195, and cooling fluid paths 195 may be disposed on respective sides of a single coating layer 191a or 193a.

A stepped portion may be provided between each of the coating layers 191a or 193a and the corresponding cooling fluid path 195 by the thickness W₃ of the coating layers 191a or 193a (FIG. 9). As a result, the electrolyte in the battery cell 100' may flow along the cooling fluid paths 195. For example, the electrolyte may flow parallel to the bottom surface of the case 130 and circulate in the case 130.

Referring to FIG. 9, the electrolyte flowing through the cooling fluid paths 195 may be disposed farther away from the electrode assembly 110 as compared to the electrolyte flowing through other areas of the interior of the case 130. The electrode assembly 110 may be an area which generates heat, and may be less affected by heat when disposed farther away from the electrode assembly 110.

Accordingly, the electrolyte in the cooling fluid paths 195 may have a relatively lower temperature than the electrolyte which is not in the cooling fluid paths 195, and the electrolyte which has passed through the cooling fluid paths 195 may cool the heat generated by the electrode assembly 110 while circulating through the interior of the case 130, thereby realizing a cooling effect.

Referring to FIG. 9, the cross-section of the battery cell 100' may have a convex-concave shape due to the coating layers 191a and 193a and the cooling fluid channels disposed in an alternating manner. In this case, in case that the electrode assembly 110 swells due to a plurality of charging and discharging, a portion of the electrode assembly 110 may enter the cooling fluid path, and the case 130 may be prevented from swelling.

As a result, the heat generation due to the change in shape and the increase in internal resistance of the case 130 caused by the swelling of the electrode assembly 110 may be reduced to ensure the stability of the cell. Furthermore, preventing the case 130 from swelling may have the effect of absorbing the swelling force of the entire battery module 1 in which the battery cells 100' are arranged.

In the embodiment described with reference to FIGS. 6-9, the coating 190 may have a stepped portion which allows a portion of the electrolyte flowing in the case 130 to collect or accumulate. That is, the discontinuous portions of the coating 190 that are spaced apart from each other on the inner surfaces of the case 130 may define the stepped portions therebetween that provide for an empty space for accommodating collection of the electrolyte flowing in the case 130, thereby minimizing collection of the electrolyte on the bottom of the case 130.

In general, in case that battery cells are placed to stand along a direction fitting to the module housing, the electrolyte may accumulate at the bottom surface of the cell due to gravity. In such a case, the electrolyte may induce unnecessary contact between the electrodes, thereby causing a short circuit, and the heat in the battery cell may not be uniformly distributed, thereby causing certain parts to overheat and compromise the safety of the battery.

In contrast, in the battery cell 100' according to another embodiment of the present invention, the coating 190 having a predetermined thickness may form the stepped portions on the inner circumferential surfaces of the case 130, which allow the electrolyte to flow along the cooling fluid paths 195 without accumulation of a portion of the electrolyte on the bottom surface of the battery cell 100', thereby realizing the effect of improving the safety of the battery.

Referring to FIG. 9, the thickness W₃ of the coating 190 may be in the range of 5% to 10% of the thickness W₁ of the electrode assembly 110. In case that the thickness W₃ of the coating 190 is less than 5% of the thickness W₁ of the electrode assembly 110, the insulating and anti-swelling effects of the coating 190 may be difficult to achieve. Furthermore, in case that the thickness W₃ of the coating 190 is 10% or more of the thickness W₁ of the electrode assembly 110, the coating 190 may occupy an excessive space in the limited volume case 130, thereby reducing the energy efficiency of the battery cell 100'.

Accordingly, the battery cell 100' according to another embodiment of the present invention may be configured such that each of the thickness W₂ of the insulator 170 and the thickness W₃ of the coating 190 is in the range of 5% to 10% of the thickness W₁ of the electrode assembly 110, thereby realizing the insulating and fire extinguishing effects without compromising the energy efficiency.

Referring to FIG. 9, each of the thickness W₂ of the insulator 170 and the thickness W₃ of the coating 190 may be in the range of 5% to 10% of the thickness W₁ of the electrode assembly 110. In other words, the total thicknesses W₂ and W₃ of the insulator 170 and the coating 190 may be in the range of 10% to 20% of the thickness of the electrode assembly 110, and the thickness W₂ of the insulator 170 and the thickness W₃ of the coating 190 may be adjusted as desired.

The coating 190 may be disposed on a surface of the case, i.e.,, between the insulator 170 and the electrode assembly 110. The coating 190 may have a shape which encloses the periphery of the electrode assembly 110, and may include a plurality of coating layers 191a and 193a which are spaced apart from and parallel to each other.

The coating 190 may include the first coating surfaces 191 disposed on wider surfaces of the inner circumferential surfaces of the case 130, and the second coating surfaces 193 having selected angles with respect to the first coating surfaces 191, and the first coating surfaces 191 and the second coating surfaces 193 may be connected to each other. The cooling fluid paths 195 may be disposed between the plurality of coating layers 191a or 193a, and the electrolyte in the case 130 may flow along the cooling fluid paths.

The coating layers 191a or 193a may include an insulating material, so that in the event of a fire in the battery cell 100', the spread of heat may be quickly stopped in the battery cell 100' before being transferred to the outside. Furthermore, stepped portions may be provided between the coating layers 191a or 193a and the cooling fluid paths 195, respectively, to form a convex-concave cross-section which may prevent the case 130 from swelling during charging and discharging of the electrode assembly 110, and thus realize the effect of preventing the electrolyte from accumulating on the bottom of the battery cell 100'.

In the battery cell according to embodiments of the present invention, the insulator disposed on the inner surfaces of the case may prevent a fire which has occurred in the battery cell from spreading to the outside. Further, the fire extinguishing layer which releases a fire extinguishing agent upon detection of a selected temperature may be disposed on the interior of the insulator including a plurality of insulating layers to realize the effect of quickly extinguishing a fire that has occurred in the battery cell. Furthermore, the coating may be disposed to form stepped portions on the interior of the insulator, thereby strengthening the insulating effect and realizing the effects of preventing the case from swelling when the electrode assembly is charged and discharged and preventing the electrolyte from accumulating on the bottom of the battery cell.

However, the effects of the present invention are not limited to those described above, and other technical effects not mentioned will be apparent to a person of ordinary knowledge in the art from the above description of the present invention.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A battery cell (100, 100'), comprising:
an electrode assembly (110) including a positive electrode (111), a negative electrode (113), and a separator (115) between the positive electrode (111) and the negative electrode (113);
a case (130) accommodating the electrode assembly (110), the case (130) including an opening (131h);
a cap plate (150) connected to the case (130) while covering the opening (131h);
and
an insulator (170) between an inner circumferential surface of the case (130) and the electrode assembly (110), the insulator (170) being configured to prevent heat generated in the case (130) from being transferred to an outside.

2. The battery cell (100, 100') as claimed in claim 1, wherein the insulator (170) includes at least one of alumina, silica, aerogel, or polyurethane.

3. The battery cell (100, 100') as claimed in claim 1 or 2, wherein the insulator (170) includes:
a first insulating layer (171) adjacent to the electrode assembly (110); and
a second insulating layer (173) over the first insulating layer (171), the first insulating layer (171) and the second insulating layer (173) including different materials.

4. The battery cell (100, 100') as claimed in claim 3, wherein the insulator (170) further includes a fire extinguishing layer (175) between the first insulating layer (171) and the second insulating layer (173), the fire extinguishing layer (175) being configured to dispense a fire extinguishing agent, in particular when an internal temperature of the case (130) is at or above a predetermined temperature.

5. The battery cell (100, 100') as claimed in any of the preceding claims, further comprising a coating (190) between the electrode assembly (110) and the insulator (170), the coating (190) being configured to prevent swelling of the case (130).

6. The battery cell (100, 100') as claimed in claim 5, wherein the coating (190) includes:
a first coating surface (191) on a surface of the case (130) opposite the electrode assembly (110); and
a second coating surface (193) at a predetermined angle with respect to the first coating surface (191),
optionally wherein each of the first coating surface (191) and the second coating surface (193) includes a plurality of coating layers (191a, 193a) spaced apart from and parallel to each other,
optionally wherein the battery cell (100, 100') further comprises a cooling fluid path (195) between adjacent ones of the plurality of coating layers (191a, 193a), the cooling fluid path (195) being configured to allow an electrolyte injected into the case (130) to flow therethrough.

7. The battery cell (100, 100') as claimed in claim 5 or 6, wherein a thickness of the coating (190) is 5% to 10% of a thickness of the electrode assembly (110).

8. A battery module (1, 1'), comprising:
a plurality of battery cells (100, 100') arranged along a predetermined direction;
a module housing (200) accommodating the plurality of battery cells (100, 100'); and
connecting tabs (300) electrically connecting the plurality of battery cells (100, 100'), each of the plurality of battery cells (100, 100') including:
an electrode assembly (110) including a positive electrode (111), a negative electrode (113), and a separator (115) between the positive electrode (111) and the negative electrode (113),
a case (130) accommodating the electrode assembly (110), the case (130) including an opening (131h),
a cap plate (150) connected to the case (130) while covering the opening (131h), and
an insulator (170) between an inner circumferential surface of the case (130) and the electrode assembly (110), the insulator (170) being configured to prevent heat generated in the case (130) from being transferred to an outside.

9. The battery module (1, 1') as claimed in claim 8, wherein the insulator (170) includes at least one of alumina, silica, aerogel, or polyurethane.

10. The battery module (1, 1') as claimed in claim 8 or 9, wherein the insulator (170) includes:
a first insulating layer (171) adjacent to the electrode assembly (110); and
a second insulating layer (173) over the first insulating layer (171), the first insulating layer (171) and the second insulating layer (173) including different materials.

11. The battery module (1, 1') as claimed in claim 10, wherein the insulator (170) further includes a fire extinguishing layer (175) between the first insulating layer (171) and the second insulating layer (173), the fire extinguishing layer (175) being configured to dispense a fire extinguishing agent.

12. The battery module (1, 1') as claimed in claim 11, wherein the fire extinguishing layer (175) is configured to dispense the fire extinguishing agent when an internal temperature of the case (130) is at or above a predetermined temperature.

13. The battery module (1, 1') as claimed in any of the claims 8 to 12, further comprising a coating (190) between the electrode assembly (110) and the insulator (170), the coating (190) being configured to prevent swelling of the case (130).

14. The battery module (1, 1') as claimed in claim 13, wherein the coating (190) includes:
a first coating surface (191) on a surface of the case (130) opposite the electrode assembly (110); and
a second coating surface (193) at a predetermined angle with respect to the first coating surface (191),
optionally wherein each of the first coating surface (191) and the second coating surface (193) includes a plurality of coating layers (191a, 193a) spaced apart from and parallel to each other,
optionally wherein the battery module (1, 1') further comprises a cooling fluid path (195) between adjacent ones of the plurality of coating layers (191a, 193a), the cooling fluid path (195) being configured to allow an electrolyte injected into the case (130) to flow therethrough.

15. The battery module (1, 1') as claimed in claim 13 or 14, wherein a thickness of the coating (190) is 5% to 10% of a thickness of the electrode assembly (110).
